# EUROPÄISCHE PATENTSCHRIFT

(11) **EP 0 838 293 B1**
(45) Veröffentlichungstag und Bekanntmachung des Hinweises auf die Patenterteilung: **28.07.2004**
(21) Anmeldenummer: 97118017.9
(22) Anmeldetag: 17.10.1997
(51) Int. Cl.: B23B 27/08, B32B 27/32, C08F 210/02, C08F 232/08

(54) **Mono- oder Mehrschichtfilm**
Mono- or multilayer film
Feuille mono- ou multicouche

(30) Priorität: 28.10.1996 DE 19644675; 19.06.1997 DE 19725975
(43) Veröffentlichungstag der Anmeldung: 29.04.1998
(73) Patentinhaber: Ticona GmbH, 65451 Kelsterbach (DE)
(72) Erfinder: Beer, Ekkehard, Dl., 65307 Bad Schwalbach (DE); Hatke, Wilfried, Dr., 65719 Hofheim (DE)

(56) Entgegenhaltungen:
- EP-A- 0 384 694
- EP-A- 0 570 188
- DE-A- 19 828 857

## Beschreibung

Die vorliegenden Erfindung betrifft einen Mono- oder Mehrschichtfilm zur Verwendung als Abdeckfolie für Blisterverpackungen, die sich leicht verarbeiten läßt, gute Barriereigenschaften, insbesondere gegen Wasserdampf aufweist, gute Recyclierbarkeit zeigt und eine einfache Handhabung durch den Endanwender ermöglicht.

Als Verpackung für verschiedenste Gegenstände werden immer häufiger Blisterverpackungen gewählt, da diese Verpackungsform vielfältige Gestaltungsmöglichkeiten bietet und einem mechanisierten Verpackungsprozess entgegen kommt. Ausgangsmaterial für eine Blisterverpackung ist eine thermisch verformbare Folie. Es handelt sich dabei um Kunststoffolien, die durch Erwärmen in einen Zustand gebracht werden, in welchem sie sich relativ leicht durch Anwendung von pneumatischem Über- oder Unterdruck oder durch Stempel verformen lassen. Durch geeignete Wahl der Formwerkzeuge lassen sich so Vertiefungen (Blister) in die Folie (Bodenfolie) einbringen, die der Gestalt des zu verpackenden Gegenstandes angepaßt werden können. Nach diesem Verformungsschritt wird der zu verpackende Gegenstand in den entstandenen Blister eingebracht. Nach dem Befüllen des Blisters wird auf die Bodenfolie eine Abdeckfolie aufgebracht, die den zu verpackenden Gegenstand in seinem Blister einschließt. Durch die Wahl einer transparenten Bodenfolie bietet sich die Möglichkeit den verpackten Gegenstand optimal zu präsentieren. Produktinformationen können auf die Außenseite der Abdeckfolie aufgebracht werden.

Die am häufigsten verwendete Kombination zum Verpacken von Arzneimitteln in Blisterverpackungen ist Polyvinylchlorid (PVC) als Bodenfolie und Aluminiumfolie als Abdeckfolie. Zur Erhöhung der Barrierwirkung gegen Gase, insbesondere Wasserdampf wird die PVC Bodenfolie häufig mit PVDC beschichtet. Zur Vermeidung von Umweltbelastungen, die beim Verbrennen von PVC auftreten (Entwicklung von Chlorwasserstoff) werden seit Jahren Anstrengungen unternommen, die PVC Bodenfolie durch andere Materialien zu ersetzen. Bodenfolien aus Polypropylen (PP) bieten eine bessere Wasserdampfsperrwirkung als PVC-Folien und sind unter ökologischen Gesichtspunkten unbedenklicher. Der Nachteil ist jedoch die schlechtere Tiefziehbarkeit und der höhere Schrumpf dieses Materials.

Als Abdeckfolie für Blisterverpackungen für Pharmazeutika wird zur Zeit fast ausschließlich Aluminiumfolie verwendet. Die Haftung zur Bodenfolie, meist PVC, wird durch eine Vorbeschichtung der Aluminiumfolie mit einem Heißsiegellack als Klebersystem erreicht. Blisterverpackungen die nach dem Prinzip einer Bodenfolie aus Kunststoff und einer Abdeckfolie aus Aluminium aufgebaut sind, haben jedoch den Nachteil, daß sie einem Recycling oder einer sinnvollen Entsorgung nur schwer zugeführt werden können.

Als Stand der Technik wird eine Blisterverpackung mit Polypropylenfolie als Abdeck- und Bodenfolie beschrieben, vgl. DE-A-4414669. Gegenüber der Verwendung von z. B. PVC mit Aluminium als Abdeckfolie läßt sich dieses System wesentlich leichter recyclen. Die Verarbeitung vor allem der Bodenfolie auf den vorhandenen Blisterverpackungsmaschinen ist jedoch problematisch. Deshalb ist die Verwendung von Blisterverpackungen auf der Basis von Polypropylenfolien bislang nicht sehr verbreitet.

Neuere Entwicklungen auf dem Gebiet der Blisterverpackungen für Arzneimittel zeigen die Verwendung von amorphen Polyolefinen, die sich durch gutes Verarbeitungsverhalten und hohe Barrieren gegen Wasserdampf auszeichnen. So beschreiben EP-A-570 188 und EP-A-631 864 die Verwendung von Polyolefinen mit cyclischen Olefinen als Polymerbaustein. Aus diesen Polymeren hergestellte Folien lassen sich aufgrund ihres amorphen Characters wesentlich leichter tiefziehen als teilkristalline Materialien wie Polypropylen.

Neben der automatisierten Verpackung und Präsentation des im Blister geschützten Produktes bietet die Blisterverpackung durch die Wahl von Bodenfolien und Abdeckfolien mit bestimmten Eigenschaften weitere Funktionalitäten. Für das Verpacken von empfindlichen Arzneimitteln in Form von Tabletten, Kapseln oder ähnlichem bietet die Auswahl geeigneter Bodenfolien und Abdeckfolien die Möglichkeit das Einwirken von Luftfeuchtigkeit und Sauerstoff wesentlich zu reduzieren und so die Lagerzeiten zu erhöhen. Bei dieser Anwendung sind die Anforderungen an die Bodenfolie und die Abdeckfolien vielfältig. Neben den geforderten Barriereigenschaften muß die Bodenfolie auch ein sehr gutes Tiefziehverhalten besitzen, welches eine gute Ausformung der Blister mit möglichst gleichmäßiger Wanddickenverteilung und hohe Tiefziehgeschwindigkeiten erlaubt. Bodenfolie und Abdeckfolien müssen eine gute Haftung zueinander aufweisen, um das sichere Verschließen der einzelnen Blister zu gewährleisten. Die Abdeckfolie sollte ebenso eine hohe Barriere vor allem gegen Luftfeuchtigkeit (Wasserdampf) aufweisen und bedruckbar sein, um Informationen aufnehmen zu können. Die Abdeckfolie muß leicht durchdrückbar sein, um eine einfache Entnahme des Arzneimittels durch Pressen auf den Blister zu gewährleisten. Für besondere Anwendungen die Abdeckfolie auch leicht abziehbar sein.

Die Abdeckfolie sollte eine ähnlich hohe Barrierewirkung besitzen wie die Bodenfolie um das Eindringen von Wasserdampf oder anderen Gasen möglichst auszuschließen. Die Forderung lautet hier, daß die Abdeckfolie eine ebenso hohe Barriere gegen Wasserdampf aufweisen sollte wie die tiefgezogenen Blister der Bodenfolie. Dieses kann erreicht werden, indem ein Material mit einer wesentlich höheren Barrierewirkung eingesetzt wird. Infolgedessen kann dieses Material in einer Dicke eingesetzt werden, die wesentlich unter der Dicke der Bodenfolie im Blister liegt. Wird ein Material mit einer vergleichbaren Barriere eingesetzt, so muß die Dicke der Abdeckfolie entsprechend angepaßt werden. Die Abdeckfolie sollte bevorzugt leicht durchdrückbar sein, so daß die Entnahme der festen Arzneimittel durch einfaches Drücken auf den ausgeformten Blister geschehen kann. Die Abdeckfolie sollte eine genügende mechanische Stabilität aufweisen um auf den verwendeten Blisterverpackungsmaschinen ohne Störungen verarbeitet werden zu können.

Die Aufgabe der vorliegenden Erfindung besteht darin, einen Mono- oder Mehrschichtfilm für eine Abdeckfolie in einer Blisterverpackung bereitzustellen, der sich leicht verarbeiten läßt, gute Barriereigenschaften, insbesondere gegen Wasserdampf aufweist, gute Recyclierbarkeit zeigt und eine einfache Handhabung durch den Verarbeiter und Endanwender ermöglicht.

Die Aufgabe der vorliegenden Erfindung wird gelöst durch einen Mono- oder Mehrschichtfilm, der mindestens eine Schicht aus einem Cycloolefinpolymeren oder einer Mischung aus Cycloolefinpolymeren und einem oder mehreren Thermoplasten enthält, wobei der Mono- oder Mehrschichtfilm bei einer relativen Feuchte von etwa 85% und einer Temperatur von etwa 23 °C eine Wasserdampfpermeation von ≤ 0,035 g*mm/m²d, eine Durchstoßfestigkeit von≤ 300 N/mm und eine Dicke von 20-150 µm aufweist.

Ein im Sinne der Erfindung besonders geeigneter Film enthält mindestens ein Cycloolefincopolymer ausgewählt aus Polymeren enthaltend 0,1 bis 100 Gew.-%, bevorzugt 0,1 bis 99,9 Gew.-%, bezogen auf die Gesamtmasse des Cycloolefinpolymers, polymerisierte Einheiten mindestens eines cyclischen Olefins der Formeln I, II, II', III, IV, V oder VI 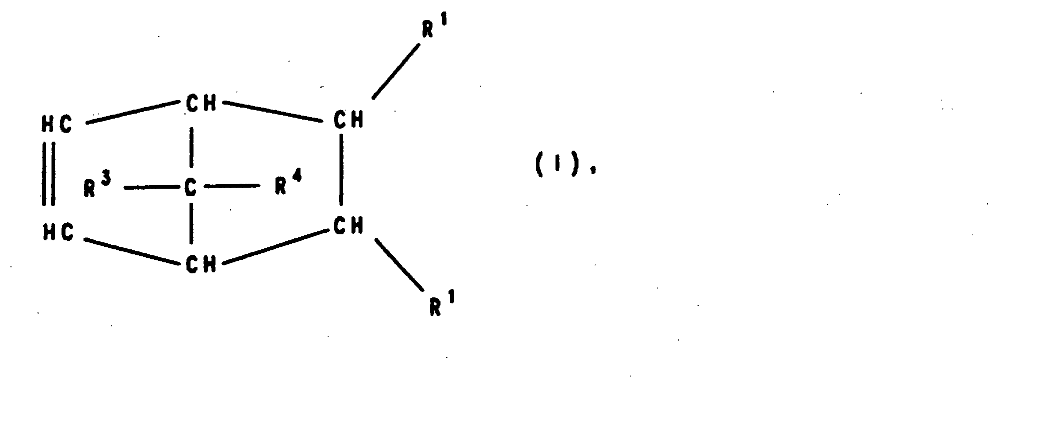 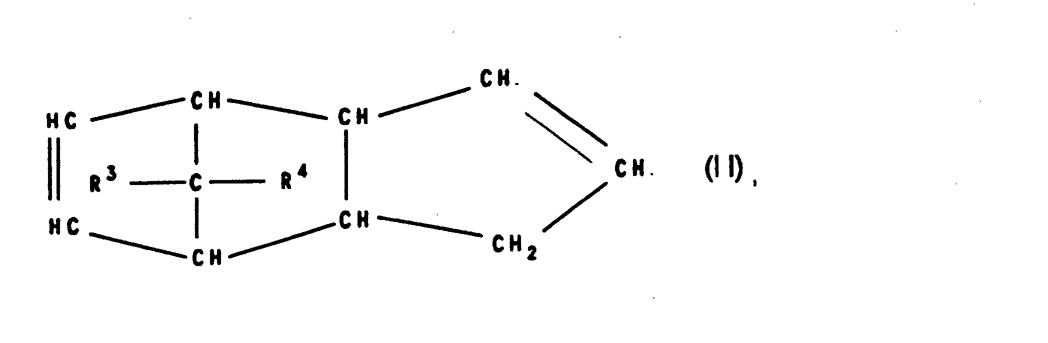 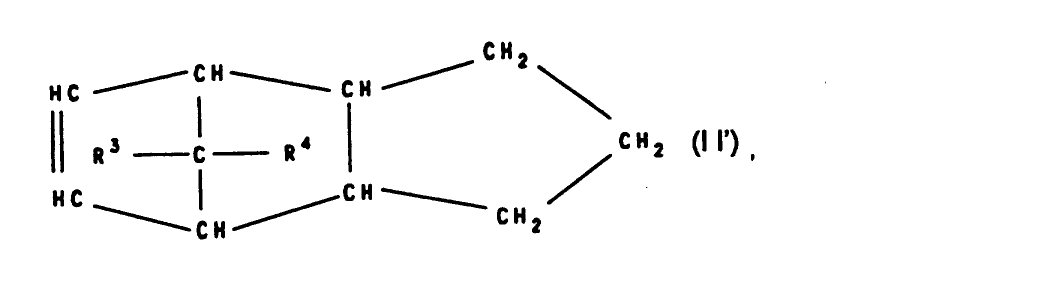 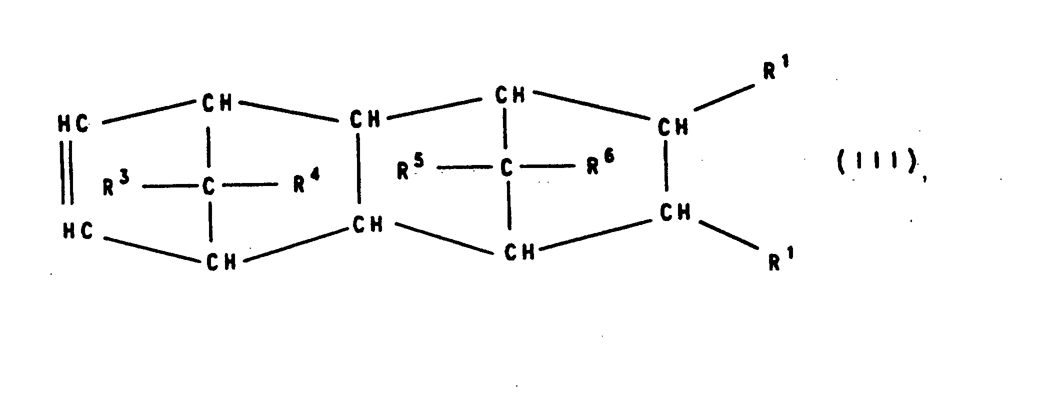 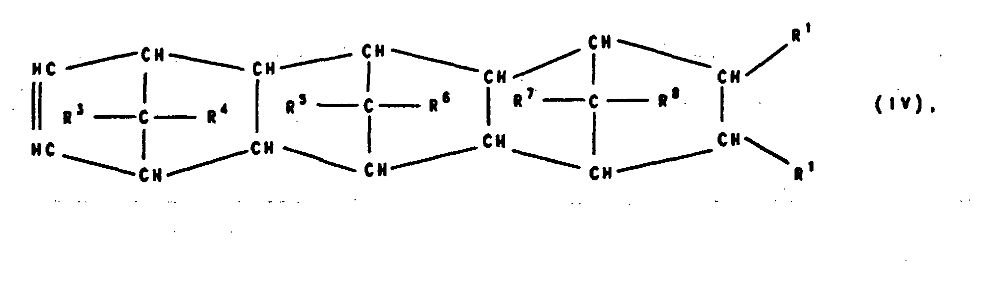 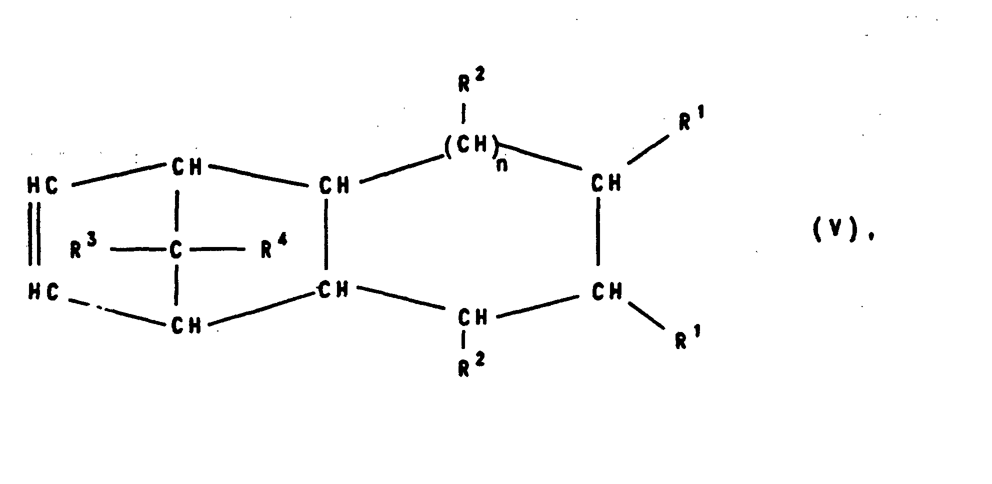 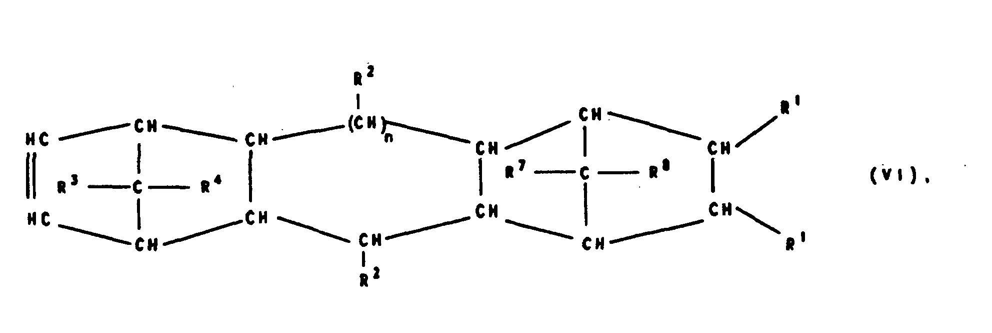 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und 0 bis 99 mol-%, bezogen auf die Gesamtzusammensetzung des Cycloolefincopolymers, polymerisierte Einheiten, welche sich ableiten von einem oder mehreren acyclischen Olefinen der Formel VII 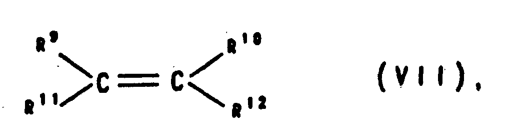 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

Die Cycloolefinpolymere können auch durch ringöffnende Polymerisation mindestens eines der Monomere mit den Formeln I bis VI und anschließender Hydrierung der erhaltenen Produkte erhalten werden.

Außerdem kann das erfindungsgemäße Cycloolefincopolymer 0 bis 45 mol-%, bezogen auf die Gesamtzusammensetzung des Cycloolefincopolymers, polymerisierte Einheiten enthalten, welche sich ableiten von einem oder mehreren monocyclischen Olefinen der Formel VIII 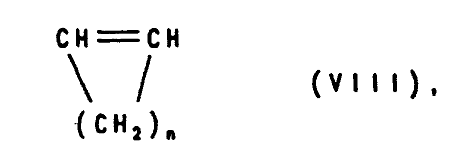 worin n eine Zahl von 2 bis 10 ist.

Der Anteil der polymerisierten Einheiten, die sich ableiten von cyclischen, insbesondere polycyclischen Olefinen beträgt bevorzugt 3 bis 75 mol-% bezogen auf die Gesamtzusammensetzung des Cycloolefincopolymers. Der Anteil der polymerisierten Einheiten, die sich ableiten von acyclischen Olefinen beträgt bevorzugt 5 bis 80 mol % bezogen auf die Gesamtzusammensetzung des Cycloolefincopolymers.

Bevorzugt bestehen die Cycloolefincopolymere aus polymerisierten Einheiten, die sich ableiten von einem oder mehreren polycyclischen Olefinen, insbesondere polycyclischen Olefinen der Formeln I oder III, und polymerisierten Einheiten, die sich ableiten von einem oder mehreren acyclischen Olefinen der Formel VII, insbesondere α-Olefinen mit 2 bis 20 C-Atomen. Insbesondere sind Cycloolefincopolymere bevorzugt, die aus polymerisierten Einheiten bestehen, die sich ableiten von einem polycyclischen Olefin der Formel I oder III und einem acyclischen Olefin der Formel VII. Weiterhin bevorzugt sind Terpolymere, die aus polymerisierten Einheiten bestehen, die sich ableiten von einem polycyclischen Monoolefin der Formel I oder III, einem acyclischen Monoolefin der Formel VII und einem cyclischen oder acyclischen Olefin, welches mindestens zwei Doppelbindungen enthält (Polyen), insbesondere cyclische, bevorzugt polycyclische Diene wie Norbornadien oder cyclische, besonders bevorzugt polycyclische Alkene, die einen C₂-C₂₀-Alkenylrest tragen wie Vinylnorbornen.

Bevorzugt enthalten die erfindungsgemäßen Cycloolefinpolymere Olefine mit Norbornengrundstruktur, besonders bevorzugt Norbornen, Tetracyclododecen und gegebenenfalls Vinylnorbornen oder Norbornadien. Bevorzugt sind auch Cycloolefincopolymere, die polymerisierte Einheiten enthalten, die sich ableiten von acyclischen Olefinen mit endständigen Doppelbindungen wie α-Olefinen mit 2 bis 20 C-Atomen, besonders bevorzugt Ethylen oder Propylen. Besonders bevorzugt sind Norbornen/Ethylen- und Tetracyclododecen/Ethylen-Copolymere.

Bei den Terpolymeren sind besonders bevorzugt Norbornen/Vinylnorbornen/Ethylen-, Norbornen/Norbornadien/Ethylen-, Tetracyclododecen/Vinylnorbornen/ Ethylen-, Tetracyclododecen/Vinyltetracyclododecen/Ethylen-Terpolymere. Der Anteil der polymerisierten Einheiten, die sich ableiten von einem Polyen, bevorzugt Vinylnorbornen oder Norbornadien, liegt bei 0,1 bis 50 mol-%, vorzugsweise bei 0,1 bis 20 mol-%, der Anteil des acyclischen Monoolefins der Formel VII beträgt 0 bis 99 mol-%, bevorzugt 5 bis 80 mol-%, bezogen auf die Gesamtzusammensetzung des Cycloolefincopolymers. In den beschriebenen Terpolymeren liegt der Anteil des polycyclischen Monoolefins bei 0,1 bis 99,9 mol-%, bevorzugt 3 bis 75 mol-%, bezogen auf die Gesamtzusammensetzung des Cycloolefincopolymers.

Das erfindungsgemäße Cycloolefincopolymer enthält vorzugsweise mindestens ein Cycloolefincopolymer, welches polymerisierte Einheiten enthält, die sich ableiten lassen von polycyclischen Olefinen der Formeln I, und polymerisierte Einheiten, die sich ableiten lassen von acyclischen Olefinen der Formel VII.

Die erfindungsgemäßen Cycloolefinpolymere können hergestellt werden bei Temperaturen von -78 bis 200 °C und einem Druck von 0,01 bis 200 bar, in Gegenwart eines oder mehrerer Katalysatorsysteme, welche mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, welche für die Herstellung der erfindungsgemäßen Cycloolefinpolymere geeignet sind, sind beschrieben in EP-A-407 870, EP-A-485 893 und EP-A-503 422. Auf diese Referenzen wird hier ausdrücklich bezug genommen.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienyl-zirkondichlorid,
Isopropylen-(9-fluorenyl)-cyclopentadienyl-zirkondichlorid,
rac-Isopropyliden-bis-(1-indenyl)zirkondichlorid
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyctopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid,
4-(η5-cyclopentadienyl)-4,7,7-trimethyl-(η⁵-4,5,6,7-tetrahydroindenylzirkondichlorid,
[4-(η⁵-cyclopentadienyl)-4,7,7-triphenyl-(η⁵-4,5,6,7-tetrahydroindenyl)]zirkondichlorid,
[4-(η⁵-cyclopentadienyl)-4,7-dimethyl-7-phenyl-(η⁵-4,5,6,7-tetrahydroindenyl)]zirkondichlorid,
[4-(η⁵-3'-tert.-butylcyclopentadienyl)-4,7,7-triphenyl-(η⁵-4,5,6,7-tetrahydroindenyl)]zirkondichlorid,
[4-(η⁵-3'-tert.-butylcyclopentadienyl)-4,7-dimethyl-7-phenyl-(η⁵-4,5,6,7-tetrahydroindenyl)]zirkondichlorid,
[4-(η⁵-3'-methylcyclopentadienyl)-4,7,7-trimethyl-(η⁵-4,5,6,7-tetrahydroindenyl)]zirkondichlorid,
[4-(η⁵-3'-methylcyclopentadienyl)-4,7,7-triphenyl-(η⁵-4,5,6,7-tetrahydroindenyl)]zirkondichlorid,
[4-(η⁵-3'-methylcyclopentadienyl)-4,7-dimethyl-7-phenyl-(η⁵-4,5,6,7-tetrahydroindenyl)]zirkondichlorid,
[4-(η⁵-3'-isopropylcyclopentadienyl)-4,7,7-trimethyl-(η⁵-4,5,6,7-tetrahydroindenyl)]zirkondichlorid,
[4-(η⁵-3'-isoproplycyclopentadienyl)-4,7,7-triphenyl-(η⁵-4,5,6,7-tetrahydroindenyl)]zirkondichlorid,
[4-(η⁵-3'-isopropylcyclopentadienyl)-4,7-dimethyl-7-phenyl-(η⁵-4,5,6,7-tetrahydroindenyl)]zirkondichlorid,
[4-(η⁵-cyclopentadienyl)(η⁵-4,5-tetrahydropentalen)]zirkondichlorid,
[4-(η⁵-cyclopentadienyl)-4-methyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-cyclopentadienyl)-4-phenyl-(η⁵-4,5-tetrahydropentalen)]zirkondichtorid,
[4-(η⁵-3'-methyl-cyclopentadienyl)(η⁵-4,5-tetrahydropentalen)]zirkondichlorid,
[4-(η⁵-3'-isopropylcyclopentadienyl)(η⁵-4,5-tetrahydropentalen)]zirkondichlorid,
[4-(η⁵-3'-benzyl-cyclopentadienyl)(η⁵-4,5-tetrahydropentalen)]zirkondichlorid
[2,2,4Trimethyl-4-(η⁵-cyclopentadienyl)-(η⁵-4,5-tetrahydropentalen)]zirkoniumdichlorid
[2,2,4Trimethyl-4-(η⁵-(3,4-Di-isopropyl)cyclopentadienyl)-(η⁵-4,5-tetrahydropentalen)]-zirkoniumdichlorid

Die erfindungsgemäß verwendeten COC-Folien zeichnen sich durch spezielle mechanische Eigenschaften aus. Die Folien können auf den verwendeten Maschinen verarbeitet werden und besitzen gleichzeitig eine geringe Durchstoßfestigkeit und eine hohe Barriere, vor allem gegen Wasserdampf. Diese COC-Folien, sind in geeigneter Weise orientiert. Dabei kann es sich um Mono- oder Mehrschichtfolien handeln. Die Folien können organische oder anorganische Füllstoffe enthalten, um die Lichtdurchlässigkeit zu verringern oder die Bedruckbarkeit zu verbessern.

Die Herstellung der Cycloolefinpolymere geschieht durch eine heterogene oder homogene Katalyse mit metallorganischen Verbindungen und ist in einer Vielzahl von Patenten beschrieben. Katalysatorsysteme basierend auf Mischkatalysatoren aus Titansalzen und Aluminiumorganylen werden in DD-A-109 224 und DD-A-237 070 beschreiben. EP-A-156 464 beschreibt die Herstellung mit Katalysatoren auf Vanadiumbasis. EP-A-283 164, EP-A-407 870, EP-A-485 893 und EP-A-503 422 beschreiben die Herstellung von Cycloolefinpolymeren mit Katalysatoren basierend auf löslichen Metallocenkomplexen. Auf die in diesen Patenten zur Herstellung von COC beschriebenen Herstellungsverfahren und verwendeten Katalysatorsysteme wird hiermit ausdrücklich bezug genommen.

Eine wichtige Anforderung für Abdeckfolien ist die sichere Handhabung auf den verwendeten Maschinen. Extrudierte nicht orientierte COC Folien sind spröde und lassen sich unter erschwerten Bedingungen nur sehr schlecht weiterverarbeiten, vgl. DE-A-4304309. So neigen sie dazu beim Aufwickeln bzw. Abwickeln unter Zug leicht einzureißen oder zu zerreißen. Aus diesem Grund muß die mechanische Festigkeit erhöht werden. Dies kann durch Orientieren (mono- oder biaxiale Reckung) der Folien geschehen. Solchermaßen orientierte Folien lassen sich wesentlich besser verarbeiten, ohne daß sie die geschilderten Nachteile aufweisen, vgl. DE-A-4304309. Die Durchstoßfestigkeit von orientierten Folien wurde nach DIN 53373 untersucht. Als Maß für die Durchstoßfestigkeit kann die Durchstoßarbeit herangezogen werden. Es wurde nun festgestellt, daß mit der Orientierung die Durchstoßfestigkeit der Folien zunimmt. Die gemessenen Werte waren größer als die der nicht orientierten Folien vergleichbarer Dicke. Gemäß DE-A-4414669 ist eine Durchstoßfestigkeit von 450 N/mm zu hoch für eine Abdeckfolien in Blisterverpackungen. Für empfindliche Arzneimittel werden niedrigere Werte angestrebt. Als eine erste Orientierung können die Werte der Durchstoßfestigkeit für Aluminiumfolien herangezogen werden. Die Durchstoßfestigkeit einer Aluminiumfolie (16 µm) liegt bei 90 N/mm. Biaxial orientierte COC Folien weisen Durchstoßfestigkeiten auf, die gößer sind als 450 N/mm. Deshalb lassen sich solche Folien nicht als Abdeckfolien für Blisterverpackungen verwenden.

Aufgrund der vergleichbaren Wasserdampfsperrwirkung der COC-Bodenfolie und der Abdeckfolie läßt sich die Dicke der Abdeckfolie nicht beliebig absenken, um so die Durchstoßfestigkeit anzupassen. Deshalb sollte die Dicke der Abdeckfolien auf Basis von COC im Bereich von 20 bis 150 µm liegen.

Es konnte nun jedoch überraschend gefunden werden, daß COC-Folien, die eine sehr spezifische Orientierung erhalten haben, sich ohne die beschriebenen Nachteile verarbeiten lassen und eine relativ geringe Durchstoßfestigkeit besitzen. Die Durchstoßfestigkeit ist vergleichbar mit der von Aluminiumfolien, die als Abdeckfolien für Blisterverpackungen verwendet werden. Wichtig ist dabei, daß die Orientierungsbedingungen so gewählt werden, daß die Durchstoßfestigkeit im Bereich von 50 bis 300N/mm liegt. Um eine sichere Verarbeitung zu gewährleisten, muß die Folie in Maschinenlaufrichtung eine genügend hohe mechanische Festigkeit aufweisen. Die Folie sollte deshalb eine Reißdehnung von > 3% und eine Reißfestigkeit von > 40 MPa besitzen.

Die Wasserdampfsperrwirkung dieser Filme ist vergleichbar mit den Werten wie sie für unverstreckte COC-Folien beobachtet werden. Die Orientierung hat daher keinen deutlichen Einfluß auf die Barrierewirkung der Folien. Die Dicken der Abdeckfolien auf der Basis von COC-Folien sollten deshalb im Bereich der Dicken der Folien im ausgeformten Blister liegen. Damit ergeben sich Foliendicken für die Abdeckfolien im Bereich von 20 bis 150 µm, bevorzugt im Bereich von 40 bis 100 µm.

Die Wasserdampfsperrwirkung wird durch die Zugabe von organischen oder anorganischen Zusätzen nicht signifikant beeinflußt. Sie liegt im Bereich von 0,2 bis 0,4 g/m²*d für eine Foliendicke von 100 µm ( 23 °C, 85 % relative Feuchte). Durch Zusätze lassen sich eingefärbte oder opak weiße oder farbige Folien herstellen. Dadurch lassen sich die Verpackungen von Arzneimittel farblich kennzeichnen, die Lichtundurchlässigkeit für lichtempfindliche Arzneimittel erhöhen oder die Bedruckbarkeit der Folien verbessern. Die Bedruckbarkeit der Abdeckfolien aus COC läßt sich verbessern, indem die Polarität der Oberfläche durch geeignete Methoden erhöht wird. Dies kann durch eine Koronabehandlung der Folie geschehen. Bei den Zusätzen kann es sich um organische Polymere wie Polypropylen oder Polyethylen als Homo- oder Copolymere, Polyester, Polyamide, Polycarbonat, Polyacetale, Acrylat- und Methacrylatpolymere handeln. Als anorganische Pigmente können Titandioxid, Bariumsulfat, Calciumsulfat, Calciumcarbonat oder Bariumcarbonat eingesetzt werden. Auf die erfindungsgemäßen Abdeckfolien können zur Verbesserung der Haftung zu Bodenfolien aus thermoplastischen Polymeren Siegelschichten aufgebracht werden. Je nach Art der verwendeten Bodenfolie müssen die Siegelschichten angepaßt werden. Als Materialien für Siegelschichten können z. B. Ethylen- und Propylenpolymere mit verschiedenen Anteilen an polaren Gruppen wie sie durch die Copolymerisation mit u. A. Vinylacetat, Acrylatmonomeren erhältlich sind oder Polymere auf der Basis von Copolymeren aus Ethylen oder Propylen mit alpha-Olefinen und polaren Monomeren verwendet werden. Weiterhin können gepropfte,u.A. mit Maleinsäureanhydrid, Ethylen- oder Propylenecopolymere als Siegelschichten verwendet werden. Durch Auswahl der Siegelschichten können die Siegeltemperaturen in einem weiten Bereich eingestellt werden.

Die Erfindung wird anhand von Beispielen näher erläutert.

### Beispiele

### Vergleichsbeispiel 1

Aus einem Copolymer aus Ethylen und 2-Norbornen mit einem Ethylengehalt (¹³C-NMR) von 45 Mol-%, hergestellt mit Metallocenkatalysator, einer Glasstufe (DSC, 20°C/min, Mittelpunkt) von 140°C, einer Lösungsviskosität (0,5 gew.%ige Lösung in Dekalin bei 135°C) von 58 ml/g und einem Molekulargewicht von M_{w}: 42000 g/mol und Mₙ: 19500 g/mol (GPC, Polyethylen-Standards, o-Dichlorbenzol, T = 135°C) wurde eine nicht orientierte Folie mit einer Dicke von 80 µm hergestellt. Die Folie war sehr spröde und brach leicht. Die mechanischen Eigenschaften dieser Folie waren wie folgt: (Mittelwerte aus drei Messungen):

| **Eigenschaft** | |
|---|---|
| **Dicke (µm)** | 30 |
| **Elastizitätsmodulus (MPa)** | 2350 |
| **Reißfestigkeit (MPa)** | 60 |
| **Reißdehnung (%)** | 2 |
| **Durchstoßfestigkeit (N/mm)** | 60 |

### Vergleichsbeispiel 2

Aus dem Polymer, wie es in Beispiel 1 beschrieben ist, wurde ein nicht orientierter Film mit einer Dicke von 300 µm hergestellt. Aus dem Film wurden Quadrate mit einer Kantenlänge 20 cm ausgeschnitten und in einen Streckrahmen gespannt. Nach 5 Minuten Vorheizen bei einer Temperatur von 150°C wurde der Film simultan und biaxial um den Faktor 3 verstreckt. Nach dem Verstrecken wurden die Kanten (ca. 5 cm) abgetrennt. Der resultierende Film hatte folgende Eigenschaften (Mittelwerte aus drei Messungen):

| **Eigenschaft** | |
|---|---|
| **Dicke (µm)** | 30 |
| **Elastizitätsmodulus (MPa)** | 3350 |
| **Reißfestigkeit (MPa)** | 92 |
| **Reißdehnung (%)** | 45 |
| **Durchstoßfestigkeit (N/mm)** | 550 |

### Beispiel 3

Aus dem Polymer, wie es in Beispiel 1 beschrieben ist, wurde ein nicht orientierter Film mit einer Dicke von 100 µm hergestellt. Aus dem Film wurden Quadrate mit einer Kantenlänge 20 cm ausgeschnitten und in einen Streckrahmen gespannt. Nach 5 Minuten Vorheizen bei einer Temperatur von 150°C wurde der Film simultan um den Faktor 1,2 in einer Richtung und um den Faktor 3,0 in der anderen Richtung verstreckt. Nach dem Verstrecken wurden die Kanten (ca. 5 cm) abgetrennt. Der resultierende Film hatte folgende Eigenschaften (Mittelwerte aus drei Messungen):

| **Eigenschaft** | **Streckfaktor: 1,2** | **Streckfaktor: 3,0** |
|---|---|---|
| **Dicke (µm)** | 30 | 30 |
| **Elastizitätsmodulus (MPa)** | 2500 | 3600 |
| **Reißfestigkeit (MPa)** | 55 | 95 |
| **Reißdehnung (%)** | 2 | 30 |
| **Durchstoßfestigkeit (N/mm)** | 120 | 120 |

### Vergleichsbeispiel 4

Aus einem Copolymer aus Ethylen und 2-Norbornen mit einem Ethylengehalt (¹³C-NMR) von 55 Mol-%, hergestellt mit Metallocenkatalysator, einer Glasstufe (DSC, 20 °C/min, Mittelpunkt) von 80 °C, einer Lösungsviskosität (0,5 gew.%ige Lösung in Dekalin bei 135 °C) von 80 ml/g und einem Molekulargewicht von Mw:52000 g/mol und Mn: 24500 g/mol (GPC, Polyethylen-Standards, o-Dichlorbenzol, T = 135°C) wurde durch Extrusion eine nicht orientierte Folie mit einer Dicke von 200 µm hergestellt. Die Folie war sel spröde und brach leicht. Die mechanischen Eigenschaften dieser Folie waren wie folgt:

| **Eigenschaft** | |
|---|---|
| Dicke: | 200 µm. |
| Elastizitätsmodulus: | 2050 MPa |
| Reißfestigkeit: | 65 MPa |
| Reißdehnung: | 3-4 % |
| Durchstoßfestigkeit: . | 200 N/mm |

### Beispiele Vergleichsbeispiel 5 und 6-7:

Aus dem Polymer, wie es in Beispiel 4 beschreiben ist, wurde durch Extrusion ein nicht nicht orientierter Film mit einer Dicke von 200 µm hergestellt. Aus dem Film wurden Oudrate mit einer Kantenlänge 20 cm ausgeschnitten und in einen Streckrahmen gespannt. Nach 5 Minuten Vorheizen bei einer Temperatur von 90 °C wurde der Film in einer Richtung um verschiedene Faktoren verstreckt. Nach dem Verstrecken wurden die Kanten (ca. 5 cm) abgetrennt. Der resultierenden Filme hatten folgende Eigenschaften:

| **Eigenschaften in Verstreckrichtung** | **Streckfaktor 1,1 (5)** | **Streckfaktor 1,4 (6)** | **Streckfaktor 2,0 (7)** |
|---|---|---|---|
| Dicke: | 185 µm. | 145 µm. | 128 µm. |
| Elastizitätsmodulus: | 2500 MPa | 3600 MPa | 3600 MPa |
| Reißfestigkeit: | 55 MPa | 95MPa | 95MPa |
| Reißdehnung: | 2 % | 45 % | 45 % |
| Durchstoßfestigkeit: | 210 N/mm | 245 N/mm | 290 N/mm |

### Beispiel 8 und Vergleichsbeispiele 9-10 :

Aus einer Mischung von 75 % (w/w) des Polymeren, wie es in Beispiel 4 beschreiben ist, und 25 % (w/w) eines Polypropylenhomopolymern (Tm: 160 °C, MFI (230/2,16):9 ml/10min) wurde durch Extrusion ein nicht nicht orientierter Film mit einer Dicke von 200 µm hergestellt. Aus dem Film wurden

Qudrate mit einer Kantenlänge 20 cm ausgeschnitten und in einen Streckrahmen gespannt. Nach 5 Minuten Vorheizen bei einer Temperatur von 100 °C wurde der Film in einer Richtung um verschiedene Faktoren verstreckt. Nach dem Verstrecken wurden die Kanten (ca. 5 cm) abgetrennt. Der resultierenden Filme hatten folgende Eigenschaften:

| **Eigenschaften in Verstreckrichtung** | **Streckfaktor 2,0 (8)** | **Streckfaktor 2,9 (9)** | **Streckfaktor 3,5 (10)** |
|---|---|---|---|
| Dicke: | 114 µm. | 145 µm. | 128 µm. |
| Elastizitätsmodulus: | 2350 MPa | 2450 MPa | 2600 MPa |
| Reißfestigkeit: | 110 MPa | 115 MPa | 120 MPa |
| Reißdehnung: | 70 % | 90 % | 110 % |
| Durchstoßfestigkeit: | 300 N/mm | - N/mm | 1100 N/mm |

Die Eigenschaften dieser Filme quer zur Streckrichtung waren: Reißdehnung: 3-4 %, Elastizitätsmodulus: 2050 - 2100 Mpa, Reißfestigkeit: 40 - 45 MPa.

### Vergleichbeispiel 11:

Die Wasserdampfsperrwirkungen der Filme aus den Beispielen 4, 7 und 8 wurden bei 23°C und 85% realtiver Feuchte bestimmt. Die Ergebnisse sind in der nachstehenden Tabelle zusammengefaßt.

| Film | Wasserdampfpermeation (g*100µm/m²*d) |
|---|---|
| Nr. 4 | 0,27 |
| Nr. 7 | 0,28 |
| Nr. 8 | 0,28 |

## Patentansprüche

1. Mono- oder Mehrschichtfilm enthaltend mindestens eine Schicht aus einem Cycloolefinpolymeren oder einer Mischung aus Cycloolefinpolymeren und einem oder mehreren Thermoplasten, wobei der Verstrechte Mono- oder Mehrschichtfilm bei einer relativen Feuchte von etwa 85 % und einer Temperatur von etwa 23 °C eine Wasserdampfpermeation von ≤ 0,035 g*mm/m²d, eine Durchstoßfestigkeit von ≤ 300 N/mm, eine Dicke von 20 bis 150 µm, eine Reißdehnung von > 3 % und eine Reißfestigkeit von > 40 MPa aufweist.

2. Mono- oder Mehrschichtfilm nach Anspruch 1, wobei der Mono- oder Mehrschichtfilm mindestens ein Cycloolefinpolymer enthält ausgewählt aus Polymeren enthaltend 0,1 bis 100 Gew.-%, bevorzugt 0,1 bis 99,9 Gew.-%, bezogen auf die Gesamtmasse des Cycloolefincopolymers, polymerisierte Einheiten mindestens eines cyclischen Olefins der Formeln I, II, II', III, IV, V oder VI 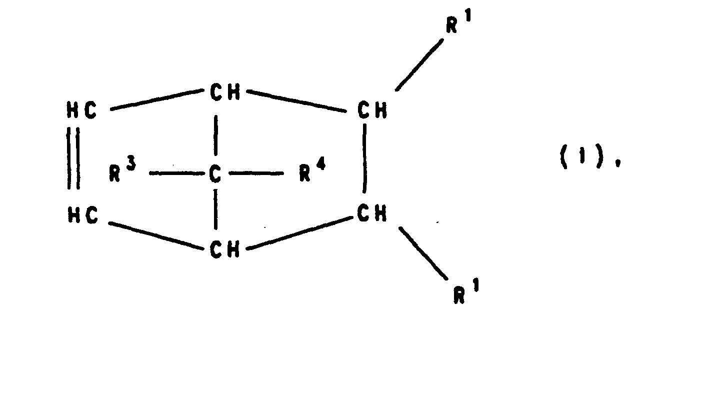 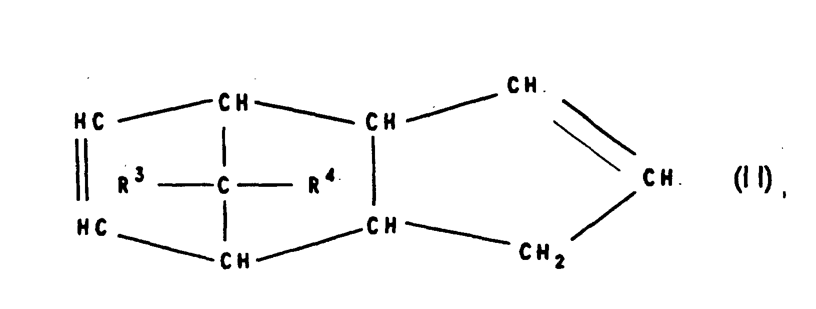 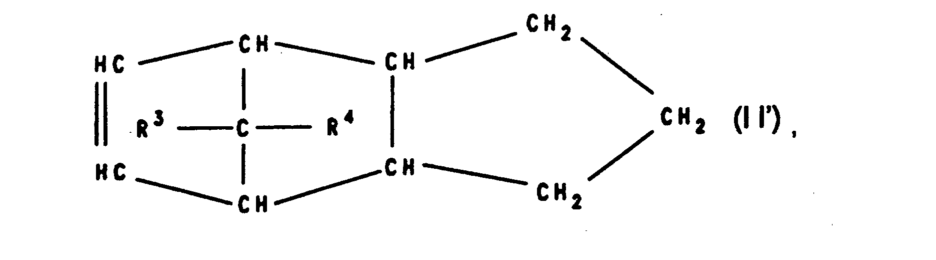 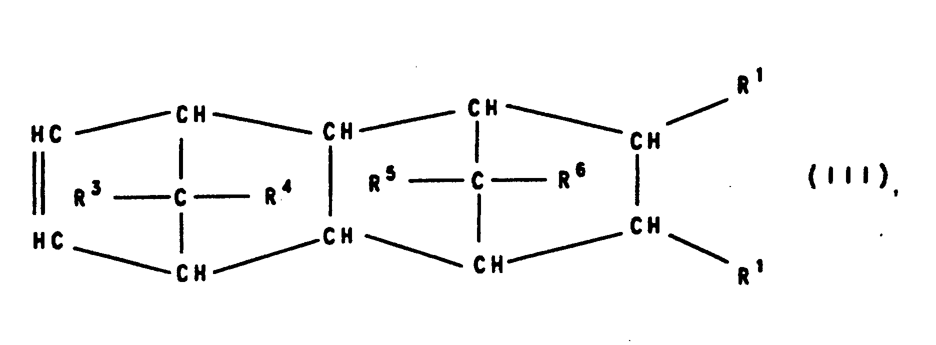 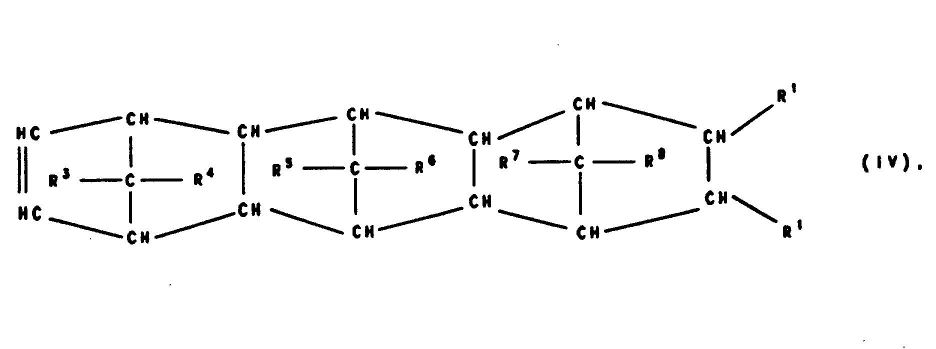 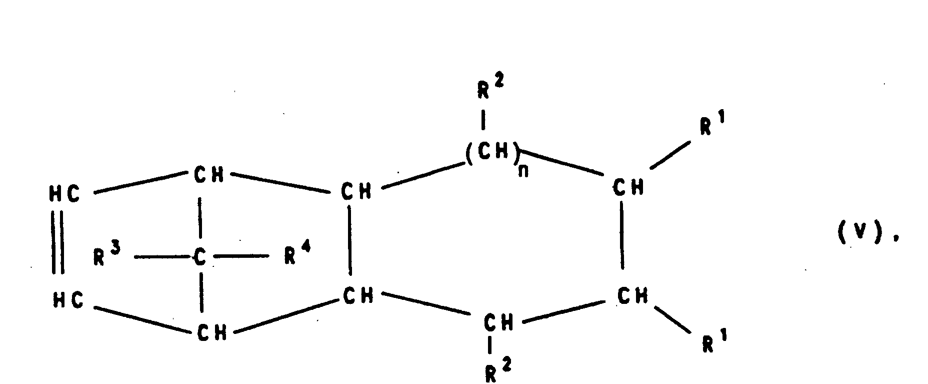 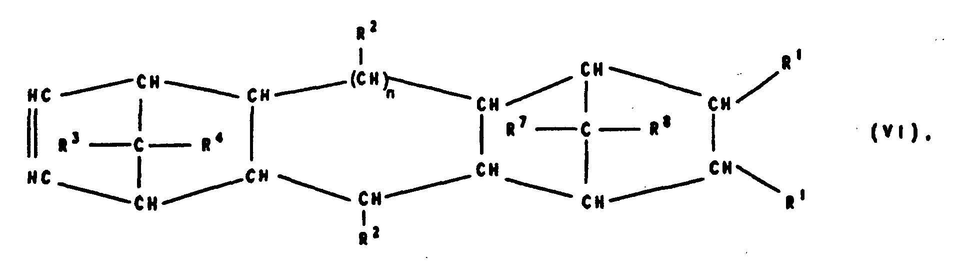 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und
0 bis 99 mol-%, bezogen auf die Gesamtzusammensetzung des Cycloolefincopolymers, polymerisierte Einheiten, welche sich ableiten von einem oder mehreren acyclischen Olefinen der Formel VII 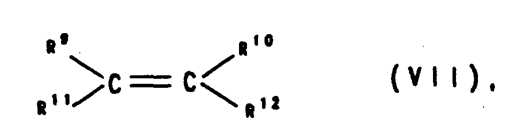 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

3. Mono- oder Mehrschichtfilm nach Anspruch 1, wobei der Mono- oder Mehrschichtfilm mindestens ein Cycloolefinpolymer enthält, der durch ringöffnende Polymerisation mindestens eines der Monomere mit den Formeln I bis VI und anschließender Hydrierung der erhaltenen Produkte erhalten wird.

4. Mono- oder Mehrschichtfilm nach einem oder mehreren der Ansprüche 1 bis 3, wobei der Mono- oder Mehrschichtfilm mindestens ein Cycloolefinpolymer enthält, das 0 bis 45 mol-%, bezogen auf die Gesamtzusammensetzung des Cycloolefinpolymers, polymerisierte Einheiten enthält, welche sich ableiten von einem oder mehreren monocyclischen Olefinen der Formel VIII 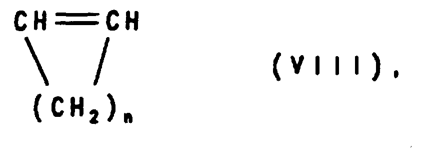 worin n eine Zahl von 2 bis 10 ist.

5. Mono- oder Mehrschichtfilm nach einem oder mehreren der Ansprüche 1 bis 4, wobei der Mono- oder Mehrschichtfilm monoaxial orientiert ist und Streckverhältnisse von 1.1 bis 4.0 aufweist.

6. Mono- oder Mehrschichtfilm nach einem oder mehreren der Ansprüche 1 bis 5, wobei der Mono- oder Mehrschichtfilm einen oder mehrere der anorganischen Füllstoffe wie Titandioxid, Bariumsulfat, Calciumsulfat, Calciumcarbonat oder Bariumcarbonat enthält.

7. Verwendung eines Mono- oder Mehrschichtfilms nach einem oder mehreren der Ansprüche 1 bis 6 als Abdeckfolie für Blisterverpackungen.

8. Verwendung einer Blisterverpackung nach Anspruch 7 für die Lagerung und Transport von Arzneimitteln, insbesondere von oralen Trockenpräparaten.

## Claims

1. A mono- or multilayer film comprising at least one layer of a cycloolefin polymer or of a mixture of cycloolefin polymers with one or more thermoplastics, where the oriented mono- or multilayer film has, at a relative humidity of approximately 85% and a temperature of approximately 23°C, a water vapor permeation of
≤ 0.035 g*mm/m²d, a puncture resistance of ≤ 300 N/mm, a thickness of from 20 to 150 µm, an elongation at break of > 3%, and an ultimate tensile strength of > 40 MPa.

2. A mono- or multilayer film as claimed in claim 1, where the mono- or multilayer film comprises at least one cycloolefin polymer selected from the class of polymers comprising from 0.1 to 100% by weight, preferably from 0.1 to 99.9% by weight, based on the total weight of the cycloolefin copolymer, of polymerized units of at least one cyclic olefin of the formulae I, II, II', III, IV, V or VI 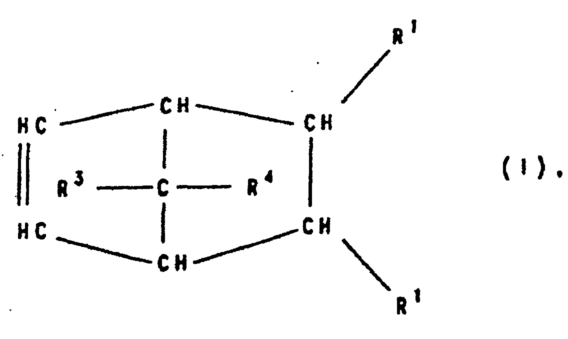 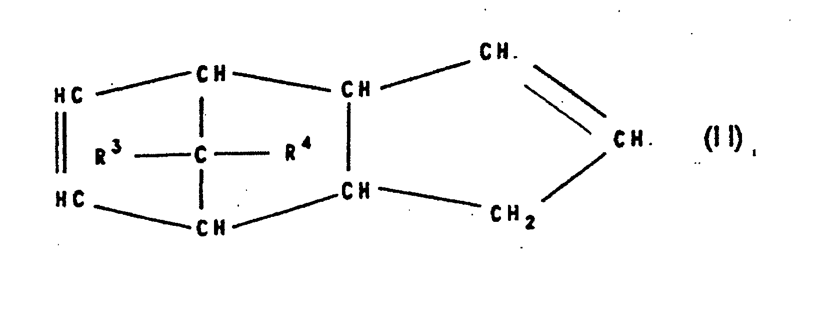 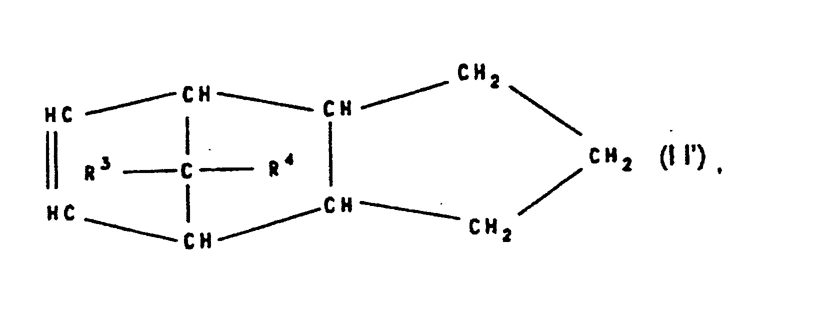 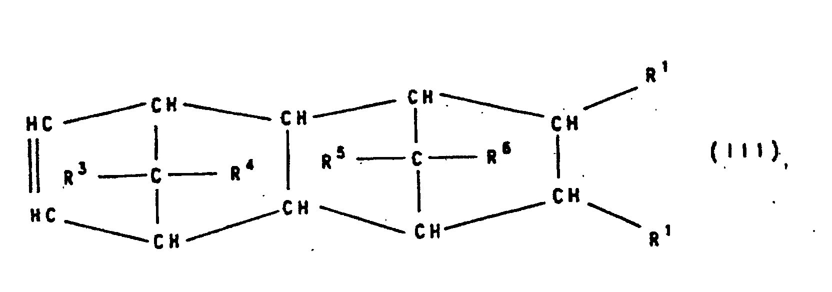 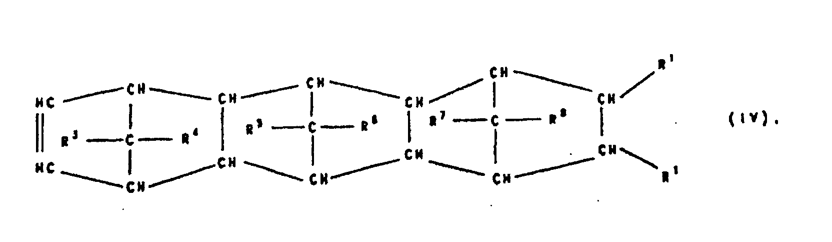 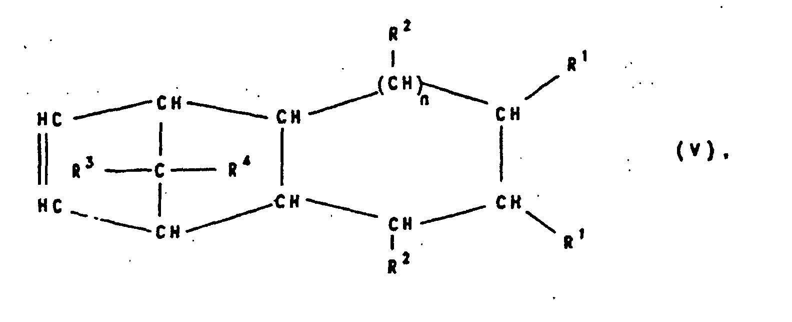 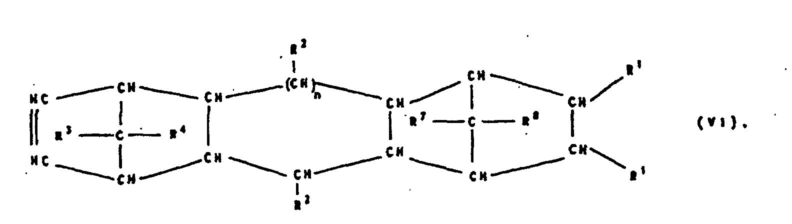 where R¹, R², R³, R⁴, R⁵, R⁶, R⁷ and R⁸ are identical or different and are hydrogen or a C₁-C₂₀-hydrocarbon radical, such as a linear or branched C₁-C₈-alkyl radical, C₆-C₁₈-aryl radical, C₇-C₂₀-alkylenearyl radical,
a cyclic or acyclic C₂-C₂₀-alkenyl radical or form a saturated, unsaturated or aromatic ring, where the same radicals R¹ to R⁸ may be different in the different formulae I to VI, where n is
from 0 to 5, and from 0 to 99 mol %, based on the entire structure of the cycloolefin copolymer, of polymerized units derived from one or more acyclic olefins of the formula VII 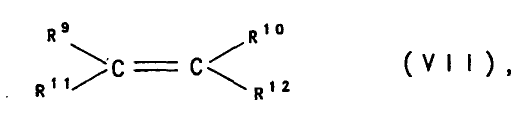 where R⁹, R¹⁰, R¹¹ and R¹² are identical or different and are hydrogen, a linear or branched, saturated or unsaturated C₁-C₂₀-hydrocarbon radical, such as a C₁-C₈-alkyl radical or a C₆-C₁₈-aryl radical.

3. A mono- or multilayer film as claimed in claim 1, where the mono- or multilayer film comprises at least one cycloolefin polymer which is obtained by ring-opening polymerization of at least one of the monomers having the formulae I to VI, followed by hydrogenation of the resultant products.

4. A mono- or multilayer film as claimed in one or more of claims 1 to 3, where the mono- or multilayer film comprises at least one cycloolefin polymer which contains from 0 to 45 mol%, based on the entire structure of the cycloolefin polymer, of polymerized units derived from one or more monocyclic olefins of the formula VIII 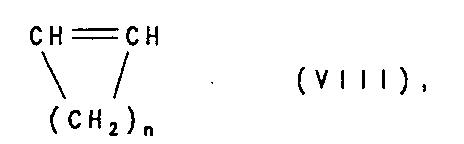 where n is a number from 2 to 10.

5. A mono- or multilayer film as claimed in one or more of claims 1 to 4, where the mono- or multilayer film is monoaxially oriented and has a stretching ratio of from 1.1 to 4.0.

6. A mono- or multilayer film as claimed in one or more of claims 1 to 5, where the mono- or multilayer film contains one or more of the inorganic fillers titanium dioxide, barium sulfate, calcium sulfate, calcium carbonate and barium carbonate.

7. The use of a mono- or multilayer film as claimed in one or more of claims 1 to 6 as backing film for blister packs.

8. The use of a blister pack as claimed in claim 7 for storing and transporting pharmaceutical products, particularly dry oral preparations.

## Revendications

1. Film monocouche ou multicouches, comprenant au moins une couche d'un polymère de cyclo-oléfines ou d'un mélange de polymères de cyclo-oléfines et d'un ou de plusieurs thermoplastes, le fil monocouche ou multicouches étiré présentant, pour une humidité relative d'environ 85% et une température d'environ 23°C, une perméation à la vapeur d'eau de ≤ 0,035 g*mm/m²d, une résistance à la perforation de ≤ 300 N/mm, une épaisseur de 20 à 150 µm, une dilatation à la rupture de > 3% et une résistance à la rupture de > 40 MPa.

2. Film monocouche ou multicouches selon la revendication 1, le film monocouche ou multicouches contenant au moins un polymère de cyclo-oléfines sélectionné parmi des polymères contenant de 0,1 à 100% en poids, de préférence, de 0,1 à 99,9% en poids, par rapport à la masse totale du copolymère de cyclo-oléfines, d'unités polymérisées d'au moins une oléfine cyclique des formules I, II, II', III, IV, V ou VI 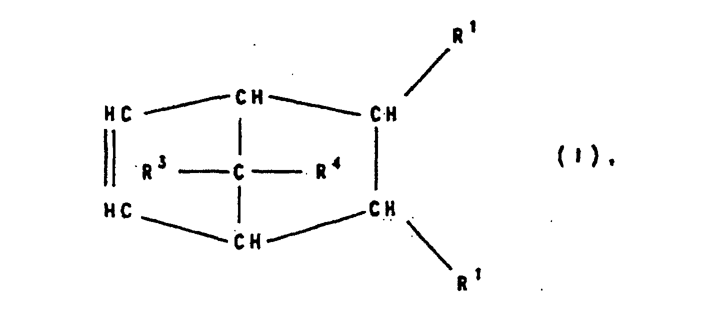 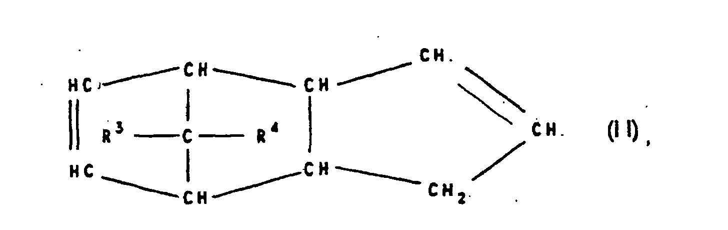 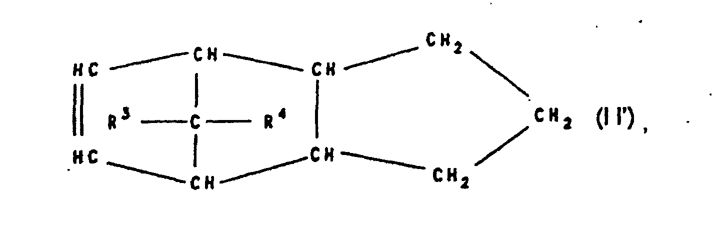 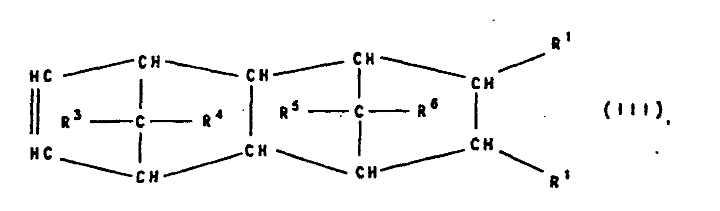 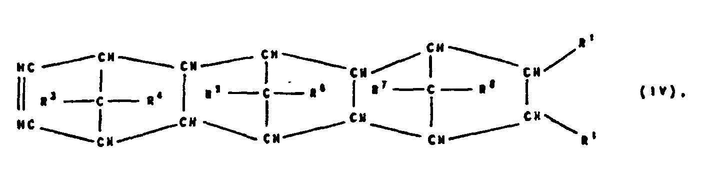 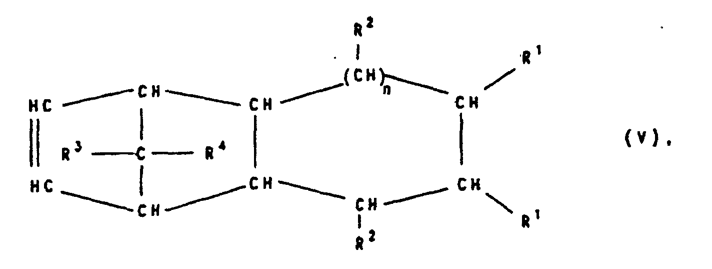 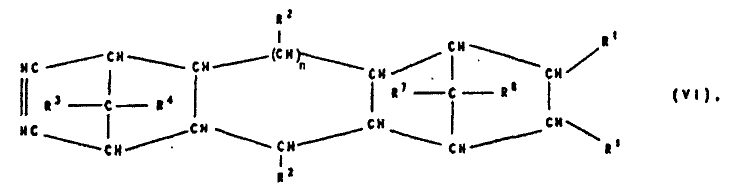 où R¹, R², R³, R⁴, R⁵, R⁶, R⁷ et R⁸ sont identiques ou différents et désignent un atome d'hydrogène ou un résidu d'hydrocarbure en C₁-C₂₀, comme un résidu alkyle en C₁-C₈, un résidu aryle en C₆-C₁₈, un résidu alcoylènaryle en C₇-C₂₀, linéaire ou ramifié, un résidu alcényle en C₂-C₂₀ cyclique ou acyclique, ou forment un cycle saturé, insaturé ou aromatique, les résidus identiques R¹ à R⁸ dans les différentes formules I à VI pouvant avoir une signification différente, où n peut prendre des valeurs allant de 0 à 5, et
de 0 à 99% en moles, par rapport à la composition globale du copolymère.de cyclo-oléfines, d'unités polymérisées, qui dérivent d'une ou de plusieurs oléfines acycliques de la formule VII 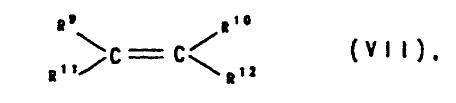 où R⁹, R¹⁰, R¹¹, et R¹² sont identiques ou différents et désignent un atome d'hydrogène, un résidu d'hydrocarbures en C₁-C₂₀ linéaire, ramifié, saturé ou insaturé, comme un résidu alkyle en C₁-C₈ ou un résidu aryle en C₆-C₁₈.

3. Film monocouche ou multicouches selon la revendication 1, le film monocouche ou multicouches contenant au moins un polymère de cyclo-oléfines, qui est obtenu par une polymérisation ouvrant des cycles d'au moins un des monomères ayant les formules I à VI et par une hydrogénation subséquente des produits obtenus.

4. Film monocouche ou multicouches selon l'une quelconque des revendications 1 à 3, le film monocouche ou multicouches contenant au moins un polymère de cyclo-oléfines, qui contient de 0 à 45% en moles, par rapport à la composition globale du polymère de cyclo-oléfines, d'unités polymérisées, qui dérivent d'une ou de plusieurs des oléfines monocycliques de la formule VIII 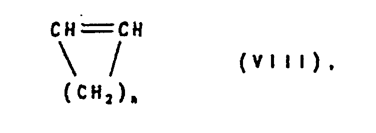 où n est un nombre allant de 2 à 10.

5. Film monocouche ou multicouches selon l'une quelconque des revendications 1 à 4, le film monocouche ou multicouches étant orienté d'une manière mono-axiale et présentant des rapports d'étirage allant de 1,1 à 4,0.

6. Film monocouche ou multicouches selon l'une quelconque des revendications 1 à 5, le film monocouche ou multicouches contenant une ou plusieurs charges inorganiques, comme le dioxyde de titane, le sulfate de baryum, le sulfate de calcium, le carbonate de calcium ou le carbonate de baryum.

7. Utilisation d'un film monocouche ou multicouches selon l'une quelconque des revendications 1 à 6, en tant que feuille de recouvrement pour les emballages blister.

8. Utilisation d'un emballage blister selon la revendication 7, en vue du stockage et du transport de médicaments, en particulier, de préparations orales sèches.
